# EUROPÄISCHE PATENTANMELDUNG

(11) **EP 2 469 148 A1**
(43) Veröffentlichungstag der Anmeldung: **27.06.2012**
(21) Anmeldenummer: 11195085.3
(22) Anmeldetag: 22.12.2011
(51) Int. Cl.: F16N 25/02, F15B 13/04

(54) **Schmierstoffverteiler und Schmiersystem**

(30) Priorität: 27.12.2010 DE 202010016974 U
(71) Anmelder: Lincoln GmbH, 69190 Walldorf (DE)
(72) Erfinder: Paluncic, Zdravko, 67067 Ludwigshafen (DE); Schönfeld, Andreas, 68789 St. Leon-Rot (DE); Müller, Tobias, 76703 Kraichtal (DE)
(74) Vertreter: KEIL & SCHAAFHAUSEN Patentanwälte

(57) **Zusammenfassung**

Die Erfindung betrifft einen Schmierstoffverteiler zum Verteilen von Schmierstoff auf mehrere Schmierstellen mit einem Hohlraum (10), in welchem ein Kolben (11) abgedichtet und bewegbar gelagert ist, und in den mehrere durch den Kolben (11) gegenüber dem Hohlraum (10) abgedichtete Schmierstoffauslässe (8) münden, mit einem Schmierstoffeinlass (7), von dem wenigstens ein Einlasskanal (12, 13) in den Hohlraum (10) mündet, und mit einer Antriebseinheit (15) zum definierten Bewegen des Kolbens (11) in dem Hohlraum (10). Dabei ist in dem Kolben (11) wenigstens ein Kanal (14) ausgebildet, durch welchen abhängig von der Position des Kolbens (11) innerhalb des Hohlraums (10) eine Strömungsverbindung zwischen dem wenigstens einen Einlasskanal (7) und einem der Schmierstoffauslässe (8) herstellbar ist. Weiter betrifft die Erfindung ein Schmiersystem mit einem solchen Schmierstoffverteiler (1) und einer mit dem Schmierstoffeinlass (7) über eine Leitung (5) verbundene Schmierstoffpumpe (2).

## Beschreibung

Die Erfindung betrifft einen Schmierstoffverteiler zum Verteilen von Schmierstoff, bspw. Fett, auf mehrere Schmierstellen. Weiter betrifft die Erfindung ein Schmiersystem mit einem derartigen Schmierstoffverteiler und einer Schmierstoffpumpe.

Zur Versorgung von Schmierstellen mit Schmierstoff werden unterschiedliche Zentral-Schmiersysteme eingesetzt, bspw. Einleitungs-, Zweileitungs-, Mehrleitungs- und Progressivsysteme. Ein gemeinsames Merkmal aller dieser Schmiersysteme ist es, dass die Schmierstellen über entsprechende Verteiler den Schmierstoff während eines Schmierzyklus erhalten. Dabei ist es grundsätzlich nicht oder nur mit einem erhöhtem Aufwand möglich, Schmierstellen in unterschiedlichen Zeitabständen und mit beliebig variierenden Mengen, d. h. individuell, mit Schmierstoff zu versorgen. Die Schmiermengen und Zeitabstände zwischen zwei Schmierzyklen sind durch die Art des Schmiersystems bzw. die Verteilerkonstruktion vorgegeben.

Aufgabe der vorliegenden Erfindung ist es demgegenüber, einen Schmierstoffverteiler sowie ein Schmiersystem bereitzustellen, welche eine individuelle Schmierstoffversorgung verschiedener Schmierstellen über eine einzelne Schmierstoffpumpe ermöglichen, wobei zum Einen die Menge des an die jeweilige Schmierstelle abgegebenen Schmierstoffs während des Betriebs des Schmierstoffverteilers und zum Anderen die Zeitabstände zwischen zwei Schmierzyklen variabel verändert werden können.

Diese Aufgabe wird im Wesentlichen mit einem Schmierstoffverteiler mit den Merkmalen des Anspruchs 1 gelöst. Der Schmierstoffverteiler weist hierzu erfindungsgemäß einen Hohlraum auf, in welchem ein Kolben abgedichtet und bewegbar gelagert ist. Dieser Hohlraum ist bspw. ein zylindrischer Raum, in welchem ein zylindrischer Kolben verschiebbar und/oder drehbar aufgenommen ist. In den Hohlraum münden mehrere Schmierstoffauslässe, wobei die Länge des Kolbens so gewählt ist, dass dieser alle Schmierstoffauslässe gegenüber dem Hohlraum verschließen kann, indem der Kolben die zu dem Schmierstoffauslass führende Öffnung des Hohlraums verschließt. Weiter weist der erfindungsgemäße Schmierstoffverteiler wenigstens einen Schmierstoffeinlass auf, von dem wenigstens ein Einlasskanal in den Hohlraum mündet. Zusätzlich ist erfindungsgemäß eine Antriebseinheit vorgesehen, die derart ausgebildet und eingerichtet ist, dass der Kolben durch die Antriebseinheit in dem Hohlraum definiert bewegt werden kann. In dem Kolben selbst ist wenigstens ein Kanal ausgebildet, durch den abhängig von der Position des Kolbens innerhalb des Hohlraums eine Strömungsverbindung zwischen dem wenigstens einen Einlasskanal und einem der Schmierstoffauslässe herstellbar ist. Mit anderen Worten verschließt der Kolben zwar die zu den Schmierstoffauslässen führenden Öffnungen des Hohlraums, allerdings gibt der in dem Kolben vorgesehene Kanal jeweils eine zu einem Schmierstoffauslass führende Öffnung derart frei, dass Schmierstoff aus dem Einlasskanal zu dem Schmierstoffauslass geleitet werden kann, wenn der Kolben durch die Antriebseinheit in eine Position innerhalb des Hohlraums gebracht wird, die eine Strömungsverbindung zwischen dem Schmierstoffauslass und dem Kanal sowie gleichzeitig zwischen dem Kanal und dem Einlasskanal herstellt. Dieser Kanal muss dabei nicht im Inneren des Kolbens vorgesehen sein, sondern kann auch auf der Außenfläche des Kolbens verlaufen, so dass der Kanal durch die Innenwand des Hohlraums und einen Bereich der Außenfläche des Kolbens gebildet wird. Auf diese Weise ist es möglich, sowohl die Menge des an die jeweiligen Schmierstellen abgegebenen Schmierstoffs während des Betriebs des Schmierstoffverteilers als auch die Zeitabstände zwischen den Schmierzyklen individuell und variabel zu ändern.

Ein weiterer Vorteil des erfindungsgemäßen Schmierstoffverteilers liegt darin, dass dieser, ggf. mit nachgeschalteten weiteren Verteilern, wie eine Mehrleitungspumpe eingesetzt werden kann, um bspw. eine Zonenschmierung zu realisieren. Auf diese Weise lassen sich unterschiedliche Zonen oder Bereiche eines Schmiersystems individuell und variabel änderbar mit Schmierstoff versorgen.

Die Schmierstoffauslässe münden vorzugsweise an in axialer Richtung des Hohlraums zueinander versetzen Stellen in diesen. Damit kann Schmierstoff an den jeweiligen Schmierstoffauslass abgegeben werden, wenn der Kolben mit dem Kanal in axialer Richtung zu dem jeweiligen Schmierstoffauslass bewegt wird.

Alternativ oder zusätzlich hierzu ist es möglich, dass wenigstens einige der Schmierstoffauslässe an in Drehrichtung um die Längsachse des Hohlraums zueinander versetzten Stellen in den Hohlraum münden. In diesem Fall kann der Kanal des Kolbens bspw. durch eine Drehung des Kolbens mit der Öffnung des jeweiligen mit Schmierstoff zu versorgenden Schmierstoffauslasses in Überdeckung gebracht werden.

Nach einer besonders bevorzugten Ausführungsform sind die Schmierstoffauslässe sowohl in axialer Richtung des Hohlraums als auch in Drehrichtung um die Längsachse des Hohlraums zueinander versetzt angeordnet. So können bspw. mehrere Schmierstoffauslässe in Gruppen in axialer Richtung des Hohlraums gesehen übereinander angeordnet sein, wobei die einzelnen Gruppen von Schmierstoffauslässen zueinander um bspw. 60° oder 90° versetzt um die Längsachse des Hohlraums verteilt angeordnet sind. Auf diese Weise können die von den Schmierstoffauslässen abzweigenden Schmierstoffleitungen angeschlossen werden, ohne dass diese sich gegenseitig behindern.

Nach einer besonders bevorzugten Ausführungsform der Erfindung münden von dem Schmierstoffeinlass mehrere Einlasskanäle an zueinander in axialer Richtung des Hohlraums und/oder an zueinander in Drehrichtung um die Längsachse des Hohlraums versetzten Stellen in diesen. Dies kann bspw. dadurch realisiert werden, dass parallel zu dem Hohlraum eine mit dem Schmierstoffeinlass in Verbindung stehende Bohrung vorgesehen wird, von der aus mehrere Querbohrungen in den Hohlraum münden. Dabei sind die Positionen der Querbohrungen vorzugsweise derart auf die Positionen der Schmierstoffauslässe abgestimmt, dass eine Querbohrung durch den Kanal des Kolbens mit genau einem Schmierstoffauslass in Strömungsverbindung gebracht werden kann, während der Kolben die Übrigen Schmierstoffauslässe sowie die übrigen Querbohrungen verschließt. Somit wird abhängig von der Position des Kolbens in dem Hohlraum genau einem Schmierstoffauslass Schmierstoff zugeführt.

Alternativ hierzu ist es auch möglich, dass der Schmierstoffeinlass in eine den Einlasskanal bildende nutartige Vertiefung in der Wand des Hohlraums mündet. Diese nutartige Vertiefung ist in einem Bereich des Hohlraums vorgesehen, in welchen kein Schmierstoffauslass mündet. Auf diese Weise ist es wiederum möglich, dass abhängig von der Position des Kolbens Schmierstoff durch den Kanal des Kolbens aus der nutartigen Vertiefung in den jeweiligen Schmierstoffauslass geleitet wird. Der übrige Bereich der nutartigen Vertiefung sowie die weiteren Schmierstoffauslässe sind dabei durch den Kolben verschlossen.

Nach einer weiteren Ausführungsform kann der Einlasskanal auch derart ausgebildet sein, dass dieser unmittelbar in den Hohlraum mündet, wobei in dem Kolben bspw. eine parallel zu der Längsrichtung des Hohlraums verlaufende Bohrung vorgesehen ist, von welcher der mit dem jeweiligen Schmierstoffauslass in Überdeckung bringbare Kanal des Kolbens abzweigt.

Nach einer besonders bevorzugten Ausführungsform der Erfindung ist der Kanal des Kolbens als eine ringförmige Nut in der Außenfläche des Kolbens ausgebildet. Der Kanal wird somit durch den Nutgrund in der Außenfläche des Kolbens sowie die Innenwandfläche des Hohlraums begrenzt. Auf diese Weise ist allein durch eine axiale Verschiebung des Kolbens innerhalb des Hohlraums der Kanal mit einem einzelnen oder mehreren in gleicher axialer Position innerhalb des Hohlraums versetzt zueinander in diesen mündenden Schmierstoffauslässen in Überdeckung bringbar. Wenn die ringförmige Nut des Kanals des Kolbens nicht um 360° um den Kolben umläuft, können durch eine zusätzliche Drehbewegung des Kolbens auch zwei in axialer Richtung des Hohlraums auf gleicher Höhe in diesen mündende Schmierstoffauslässe definiert mit Schmierstoff versorgt bzw. von der Schmierstoffversorgung abgetrennt werden.

Es hat sich als besonders vorteilhaft herausgestellt, wenn die Antriebseinheit einen Schrittmotor aufweist, mit welchem der Kolben definiert innerhalb des Hohlraums bewegbar ist. Alternativ ist es auch möglich, einen Getriebemotor, ggf. mit Drehgeber, zur Betätigung des Kolbens vorzusehen. Hierbei wird eine Spindel- oder Wellendrehbewegung in eine axiale Bewegung umgesetzt, wobei der Drehgeber zur Positionserfassung der Spindel oder Welle dient. Nach einer weiteren Ausführungsform der Erfindung kann der Kolben auch hydraulisch oder pneumatisch bewegt werden, wobei für die hydraulische Betätigung des Kolbens auch der Schmierstoff selbst genutzt werden kann.

Die Aufgabe der vorliegenden Erfindung wird darüber hinaus mit einem Schmiersystem mit einem Schmierstoffverteiler der oben genannten Art sowie mit einer Schmierstoffpumpe gelöst, die über eine Leitung mit dem Schmierstoffeinlass des Schmierstoffverteilers verbunden ist. Vorzugsweise ist der Schmierstoffverteiler des Schmiersystems zusätzlich zu der Schmierstoffleitung über eine weitere Leitung mit der Schmierstoffpumpe verbunden, wobei diese weitere Leitung die Antriebseinheit zur Betätigung des Kolbens von der Schmierstoffpumpe mit Antriebsenergie versorgt. Dabei hat es sich als besonders vorteilhaft erwiesen, wenn die Antriebseinheit des Schmierstoffverteilers nicht nur von der Schmierstoffpumpe mit Antriebsenergie versorgt wird, sondern zusätzlich auch über eine Steuereinheit der Schmierstoffpumpe betätigbar bzw. ansteuerbar ist.

In Weiterentwicklung dieses Erfindungsgedankens können auch mehrere Schmierstoffverteiler, insbesondere mittels eines Feldbussystems, angesteuert werden.

Die Erfindung wird nachfolgend anhand eines Ausführungsbeispiels und unter Bezugnahme der Zeichnungen näher erläutert. Dabei bilden alle beschriebenen und/oder bildlich dargestellten Merkmale für sich den Gegenstand der Erfindung unabhängig von ihrer Zusammenfassung den Ansprüchen oder deren Rückbezügen.

Es zeigen schematisch:
- Fig. 1: in Perspektivansicht ein erfindungsgemäßes Schmiersystem,
- Fig. 2: in teilweise aufgebrochene Draufsicht einen erfindungsgemäßen Schmierstoffverteiler und
- Fig. 3: in Perspektivansicht den Schmierstoffverteiler nach Fig. 2.

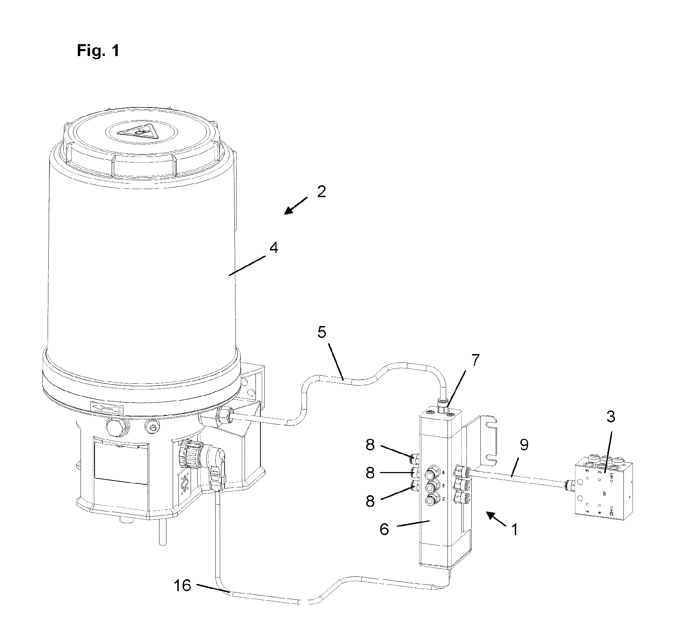

Das Schmiersystem ist in der in Fig. 1 dargestellten Ausführungsform im Wesentlichen durch einen Schmierstoffverteiler 1, eine Schmierstoffpumpe 2 sowie einen weiteren Verteiler 3 gebildet, von dem aus Schmierstoff an einzelne Schmierstellen (nicht dargestellt) abgegeben werden können. Die Schmierstoffpumpe 2 weist einen Schmierstoffbehälter 4 auf, in welchem ein Vorrat von Schmierstoff, insbesondere Schmierfett, aufgenommen ist. Auf der in Fig. 1 unteren Seite des Schmierstoffbehälters 4 ist in einem Gehäuse ein Pumpenelement angeordnet, welches Schmierstoff aus dem Schmierstoffbehälter 4 ansaugen und über eine Leitung 5 zu dem Schmierstoffverteiler 1 fördern kann. Die Schmierstoffpumpe 2 weist darüber hinaus eine ebenfalls in dem Gehäuse unterhalb des Schmierstoffbehälters 4 vorgesehene Steuerung auf, welche einen Antriebsmotor für das Pumpenelement sowie ggf. einen in dem Schmierstoffbehälter 4 vorgesehenen Rührflügel steuern kann.

Der Schmierstoffverteiler 1 weist einen bspw. länglichen Grundkörper 6 bzw. ein Gehäuse mit einem Schmierstoffeinlass 7 auf, der über die Leitung 5 mit der Schmierstoffpumpe 2 in Verbindung steht. In der dargestellten Ausführungsform ist der Schmierstoffverteiler mit neun Schmierstoffauslässen 8 versehen, von denen jeweils drei in Längsrichtung des Schmierstoffverteilers 1 gesehen übereinander liegend in Gruppen zusammengefasst sind, wobei diese Gruppen jeweils um 90° zueinander versetzt auf der Außenfläche des Grundkörpers 6 angeordnet sind.

Die Schmierstoffauslässe 8 können entweder unmittelbar über entsprechende Leitungen mit einer Schmierstelle verbunden werden oder über eine Leitung 9 mit einem weiteren Verteiler 3 verbunden sein, von dem wiederum Schmierstoffauslässe zu den einzelnen Schmierstellen führen.

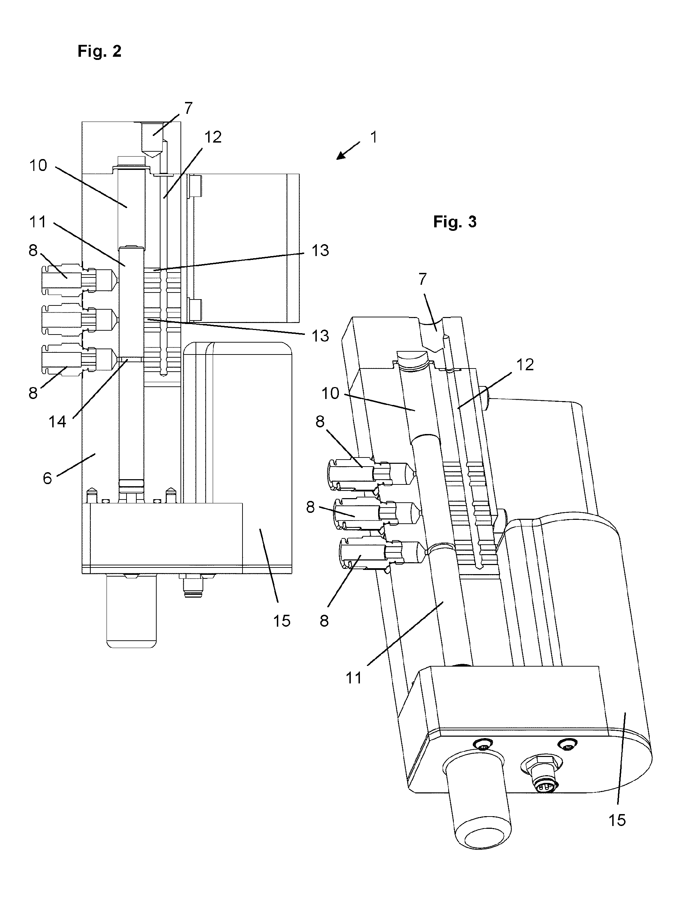

Der Aufbau des Schmierstoffverteilers 1 ist in den Figuren 2 und 3 näher dargestellt. In dem Grundkörper 6 ist eine in dessen Längsrichtung verlaufende Bohrung ausgebildet, die einen zylindrischen Hohlraum 10 definiert. Der Grundkörper 6 bzw. der Hohlraum 10 kann auf seiner in den Figuren oberen Seite durch einen Deckel verschlossen sein, in welchen der Schmierstoffeinlass 7 mündet.

In dem Hohlraum 10 ist ein zylindrischer Kolben 11 angeordnet, welcher in dem Hohlraum 10 abgedichtet geführt ist. Die Schmierstoffauslässe 8 münden wie aus Fig. 2 ersichtlich an zueinander in Längsrichtung des Grundkörpers 6 bzw. in Längsrichtung des Hohlraums 10 zueinander axial versetzten Stellen in den Hohlraum 10. Von den neun in Fig. 1 dargestellten Schmierstoffauslässen 8 ist dabei jeder Schmierstoffauslass 8 axial zu den übrigen Schmierstoffauslässen so versetzt, dass die in den Hohlraum 10 mündenden Öffnungen der Schmierstoffauslässe 8 in axialer Richtung einander nicht überdecken. Mit anderen Worten sind die jeweils drei Gruppen von Schmierstoffauslässen nicht nur zueinander um 90° gedreht in dem Schmierstoffverteiler 1 angeordnet, sondern zueinander auch in axialer Richtung geringfügig versetzt zu den anderen Gruppen von Schmierstoffauslässen.

In der dargestellten Ausführungsform verläuft parallel zu der Bohrung des Hohlraums 10 eine weitere Bohrung 12 in dem Grundkörper 6, wobei diese Bohrung 12 mit dem Schmierstoffeinlass 7 in Verbindung steht und einen Einlasskanal bildet. Von der Bohrung 12 erstrecken sich mehrere Querbohrungen 13 derart durch den Grundkörper, dass die Querbohrungen 13 an zueinander axial versetzten Stellen die Bohrung 12 mit dem Hohlraum 10 verbinden. Die Positionen der Querbohrungen 13 sind dabei derart auf die Positionen der Schmierstoffauslässe 8 abgestimmt, dass jede Querbohrung jeweils mit genau einer Öffnung eines Schmierstoffauslasses 8 in axialer Richtung des Hohlraums 10 auf gleicher Höhe liegt. Jede Querbohrung 13 ist somit definiert genau einem Schmierstoffauslass 8 zugeordnet.

Zur Weiterleitung des Schmierstoffs aus dem Einlasskanal und den Querbohrungen 13 in jeweils einen Schmierstoffauslass 8 ist auf dem Kolben 11 eine ringförmig umlaufende Nut 14 ausgebildet, die zusammen mit der Innenwandfläche des Hohlraums 10 einen (weiteren) Kanal 14 bildet, der abhängig von der Position des Kolbens 11 innerhalb des Hohlraums 10 jeweils eine Querbohrung 13 mit genau einem Schmierstoffauslass 8 verbindet. Der Schmierstoff strömt dabei aus der Querbohrung 13 durch den Kanal 14 um den Kolben 11 herum in die zu dem jeweiligen Schmierstoffauslass 8 gehörende Öffnung innerhalb des Hohlraums 10. Damit lässt sich abhängig von der Position des Kolbens 11 innerhalb des Hohlraums 10 Schmierstoff von dem Schmierstoffeinlass 7 definiert an einen der Schmierstoffauslässe 8 abgeben.

Zum Bewegen des Kolbens 11 innerhalb des Hohlraums 10 ist dem Kolben 11 eine Antriebseinheit 15, bspw. ein Schrittmotor, derart zugeordnet, dass der Kolben 11 durch die Antriebseinheit 15 definiert in axialer Richtung des Hohlraums 10 bewegt werden kann. Hierzu ist die Antriebseinheit 15 über ein Kabel 16 mit der Schmierstoffpumpe 2 bzw. deren Steuerung verbunden, so dass über die Steuerung der Schmierstoffpumpe 2 auch der Schmierstoffverteiler 1 angesteuert und definiert mit Energie versorgen werden kann.

Statt der Versorgung des Antriebs 15 über das Kabel 16 kann bei einem hydraulischen Antrieb des Kolbens 11 auch der von der Schmierstoffpumpe erzeugte Druck zur Steuerung und/oder Betätigung des Kolbens genutzt werden.

Mit der erfindungsgemäßen Ausgestaltung des Verteilers 1 kann jeder der Schmierstoffauslässe 8 geöffnet bzw. mit dem Schmierstoffeinlass 7 verbunden werden, wobei die Öffnungsdauer und die Reihenfolge, in welcher die Schmierstoffauslässe 8 geöffnet werden, individuell festgelegt werden kann. Damit können die übrigen Schmierstoffauslässe auch dann mit Schmierstoff versorgt werden, wenn die mit einem der Schmierstoffauslässe 8 verbundene Leitung bzw. Schmierstelle blockiert, d.h. bspw. verstopft, ist.

### Bezugszeichenliste:

- 1: Schmierstoffverteiler
- 2: Schmierstoffpumpe
- 3: weiterer Verteiler
- 4: Schmierstoffbehälter
- 5: Leitung
- 6: Grundkörper
- 7: Schmierstoffeinlass
- 8: Schmierstoffauslass
- 9: Leitung
- 10: Hohlraum
- 11: Kolben
- 12: Einlasskanal
- 13: Querbohrung
- 14: weiterer Kanal (Nut)
- 15: Antriebseinheit
- 16: Kabel

## Patentansprüche

1. Schmierstoffverteiler zum Verteilen von Schmierstoff auf mehrere Schmierstellen
mit einem Hohlraum (10), in welchem ein Kolben (11) abgedichtet und bewegbar gelagert ist, und in den mehrere durch den Kolben (11) gegenüber dem Hohlraum (10) abgedichtete Schmierstoffauslässe (8) münden,
mit einem Schmierstoffeinlass (7), von dem wenigstens ein Einlasskanal (12, 13) in den Hohlraum (10) mündet, und
mit einer Antriebseinheit (15) zum definierten Bewegen des Kolbens (11) in dem Hohlraum (10),
wobei in dem Kolben (11) wenigstens ein Kanal (14) ausgebildet ist, durch welchen abhängig von der Position des Kolbens (11) innerhalb des Hohlraums (10) eine Strömungsverbindung zwischen dem wenigstens einen Einlasskanal (7) und einem der Schmierstoffauslässe (8) herstellbar ist.

2. Schmierstoffverteiler nach Anspruch 1, **dadurch gekennzeichnet, dass** die Schmierstoffauslässe (8) an in axialer Richtung des Hohlraums (10) zueinander versetzten Stellen in den Hohlraum (10) münden.

3. Schmierstoffverteiler nach Anspruch 1 oder 2, **dadurch gekennzeichnet, dass** wenigstens einige der Schmierstoffauslässe (8) an in Drehrichtung um die Längsachse des Hohlraums (10) zueinander versetzten Stellen in den Hohlraum (10) münden.

4. Schmierstoffverteiler nach einem der vorhergehenden Ansprüche, **dadurch gekennzeichnet, dass** von dem Schmierstoffeinlass (7) mehrere Einlasskanäle (12, 13) an zueinander in axialer Richtung des Hohlraums (10) und/oder an zueinander in Drehrichtung um die Längsachse des Hohlraums (10) versetzten Stellen in den Hohlraum (10) münden.

5. Schmierstoffverteiler nach einem der Ansprüche 1 bis 3, **dadurch gekennzeichnet, dass** der Schmierstoffeinlass (7) in eine den Einlasskanal (12, 13) bildende nutartige Vertiefung in der Wand des Hohlraums (10) mündet.

6. Schmierstoffverteiler nach einem der Ansprüche 1 bis 3, **dadurch gekennzeichnet, dass** der Schmierstoffeinlass (7) in einen in dem Kolben (11) ausgebildeten Einlasskanal (12, 13) mündet.

7. Schmierstoffverteiler nach einem der vorhergehenden Ansprüche, **dadurch gekennzeichnet, dass** der Kanal als eine ringförmige Nut (14) in der Außenfläche des Kolbens (11) ausgebildet ist.

8. Schmierstoffverteiler nach einem der vorhergehenden Ansprüche, **dadurch gekennzeichnet, dass** die Antriebseinheit (15) einen Schrittmotor oder einen Getriebemotor mit einer Umsetzung einer Drehbewegung in eine Verschiebebewegung, ggf. mit einem Drehgeber, aufweist.

9. Schmiersystem mit einem Schmierstoffverteiler (1) nach einem der vorhergehenden Ansprüche und einer mit dem Schmierstoffeinlass (7) über eine Leitung (5) verbundene Schmierstoffpumpe (2).

10. Schmiersystem nach Anspruch 9, **dadurch gekennzeichnet, dass** die Antriebseinheit (15) des Schmierstoffverteilers (1) von der Schmierstoffpumpe (2) mit Antriebsenergie versorgt wird und/oder über eine Steuereinheit der Schmierstoffpumpe (2) betätigbar ist.

11. Schmiersystem nach Anspruch 9 oder 10 mit mehreren mittels eines Feldbussystems angesteuerten Schmierstoffverteilern.
